# FASCICULE DE BREVET EUROPEEN

(11) **EP 1 131 265 B1**
(45) Date de publication et mention de la délivrance du brevet: **14.04.2004**
(21) Numéro de dépôt: 99971399.3
(22) Date de dépôt: 21.10.1999
(51) Int. Cl.: C01D 3/16, C04B 18/10

(54) **PROCEDE DE FABRICATION D'UNE SOLUTION AQUEUSE DE CHLORURE DE SODIUM**
VERFAHREN ZUR HERSTELLUNG EINER WÄSSRIGEN NATRIUM CHLORID LÖSUNG
METHOD FOR MAKING AN AQUEOUS SODIUM CHLORIDE SOLUTION

(30) Priorité: 30.10.1998 BE 9800787
(43) Date de publication de la demande: 12.09.2001
(73) Titulaire: SOLVAY (Société Anonyme), 1050 Bruxelles (BE)
(72) Inventeur: HUMBLOT, Cédric, F-94300 Vincennes (FR)
(74) Mandataire: Jacques, Philippe
(86) Numéro de dépôt international: PCT/EP1999/008144
(87) Numéro de publication internationale: WO 2000/026140

(56) Documents cités:
- EP-A- 0 603 218
- EP-A- 0 899 000
- WO-A-97/31874
- FR-A- 2 387 910

## Description

L'invention est relative à la fabrication de solutions aqueuses de chlorure de sodium, au départ de chlorure de sodium solide, contaminé par des métaux lourds.

Les déchets d'origine ménagère ou hospitalière contiennent habituellement des quantités substantielles de composés chlorés, ainsi que des métaux lourds. L'incinération de ces déchets conduit dès lors à la production de fumées contaminées par du chlorure d'hydrogène et des métaux lourds, et il est nécessaire de les épurer avant de les rejeter dans l'atmosphère. Une technique connue d'épuration de telles fumées consiste à les traiter, par voie sèche ou semi-humide, avec un réactif basique, sodique, habituellement du bicarbonate de sodium ou du carbonate de sodium [brevet européen EP-B 0 603 218 de SOLVAY (Société Anonyme)]. Les poussières recueillies de cette technique d'épuration de fumée contiennent une quantité appréciable de chlorure de sodium, qu'il est utile de valoriser, par exemple sous la forme de solutions aqueuses. Ces poussières contiennent toutefois aussi des métaux lourds, dont la présence doit être évitée dans les solutions aqueuses de chlorure de sodium. Selon un procédé connu, on disperse les poussières dans une quantité d'eau suffisante pour dissoudre le chlorure de sodium, et le milieu aqueux ainsi obtenu est additionné d'hydroxyde de sodium ou de calcium pour l'alcaliniser et précipiter les métaux lourds à l'état d'hydroxyde métalliques. Ceux-ci sont ensuite séparés de la solution de chlorure de sodium au moyen d'une filtration (brevet européen EP-B 0 603 218 précité).

On a maintenant trouvé un procédé amélioré pour la fabrication de solutions aqueuses de chlorure de sodium au départ d'une matière solide contenant du chlorure de sodium et des métaux lourds, qui toutes autres choses égales par ailleurs, permet d'obtenir des solutions aqueuses dont le degré de pureté est supérieur à celui obtenu avec le procédé connu décrit plus haut.

En conséquence, l'invention concerne un procédé de fabrication d'une solution aqueuse de chlorure de sodium, selon lequel on disperse, dans de l'eau, une matière solide comprenant du chlorure de sodium et des métaux lourds, on alcalinise le milieu aqueux ainsi obtenu, pour précipiter les métaux lourds à l'état d'hydroxydes métalliques et on soumet ensuite le milieu aqueux à une clarification mécanique. Selon l'invention, on coprécipite du carbonate de calcium avec les hydroxydes métalliques dans le milieu aqueux.

Dans le procédé selon l'invention, la matière solide est habituellement à l'état d'une poudre. Son origine n'est pas critique. Elle est généralement un résidu industriel, par exemple un résidu d'épuration d'un fluide industriel.

La matière solide soumise au procédé selon l'invention contient du chlorure de sodium et des métaux lourds. On entend désigner par métaux lourds, les métaux dont la masse spécifique est au moins égale à 5 g/cm³, ainsi que le béryllium, l'arsenic, le sélénium et l'antimoine, conformément à la définition généralement admise (Heavy Metals in Wastewater and Studge Treatment Processes; Vol. I, CRC Press, Inc; 1987; page 2). Dans le cadre de la présente invention, l'aluminium est associé aux métaux lourds.

Les quantités respectives de chlorure de sodium et de métaux lourds dans la matière solide soumise au procédé selon l'invention ne sont pas critiques et dépendent de l'origine de celle-ci. Par exemple, dans le cas de poussières provenant du traitement d'un gaz contenant du chlorure d'hydrogène, avec un réactif basique sodique, la matière solide contient habituellement au moins 10 g de chlorure de sodium par kg (généralement de 50 à 850 g/kg) et de 5 à 80 g de métaux lourds par kg. La matière solide peut en outre éventuellement contenir d'autres constituants hydrosolubles ou insolubles dans l'eau, tels que, par exemple, du sulfate de sodium, du carbonate de calcium et du sulfate de calcium. Elle contient habituellement du carbonate de sodium, lorsqu'elle provient du traitement d'un gaz contenant du chlorure d'hydrogène, avec un réactif basique alcalin.

L'eau doit être mise en oeuvre en une quantité suffisante pour dissoudre la totalité du chlorure de sodium. On n'a pas intérêt à utiliser un excès d'eau.

L'alcalinisation du milieu aqueux a pour fonction d'insolubiliser les métaux lourds, en les précipitant à l'état d'hydroxydes métalliques. Elle est normalement réalisée par addition d'un composé basique au milieu aqueux. On utilise avec avantage de l'hydroxyde de sodium, à l'état solide ou l'état d'une solution aqueuse. L'alcalinisation doit être réglée pour insolubiliser les métaux lourds présents dans le milieu aqueux et elle dépend dès lors des métaux lourds présents. En pratique, on obtient de bons résultats en réalisant l'alcalinisation de manière que le pH du milieu aqueux soit au moins égal à 8 et n'excède pas 14, de préférence 12, les meilleurs résultats étant obtenu lorsque le pH se situe entre 9 et 12.

Dans le procédé selon l'invention, la clarification mécanique est un processus opératoire dans lequel une suspension d'une ou plusieurs substances solides dans un liquide est soumise à une séparation physique en au moins une phase très concentrée en substance solide et une phase liquide sensiblement exempte de substance solide, sans changement d'état de l'un ou l'autre constituant de la suspension aqueuse, en particulier sans évaporation, ni solidification du liquide. Des exemples de ce processus opératoire de clarification comprennent la filtration, la centrifugation et la sédimentation suivie d'une décantation. La filtration est le processus préféré, que l'on peut éventuellement combiner à une centrifugation ou à une sédimentation suivie d'une décantation.

Dans le procédé selon l'invention, la clarification a pour fonction de séparer les matières insolubles (particulièrement le précipité d'hydroxydes de métaux lourds) de la solution aqueuse de chlorure de sodium.

Conformément à l'invention, on coprécipite du carbonate de calcium avec les hydroxydes de métaux lourds. On entend, par cette expression, que du carbonate de calcium précipite dans le milieu aqueux, en même temps que les hydroxydes de métaux lourds.

Tout moyen approprié peut être utilisé pour précipiter le carbonate de calcium. Selon une forme de réalisation préférée de l'invention, on précipite le carbonate de calcium en faisant réagir du carbonate de sodium avec du chlorure de calcium et éventuellement d'autres sels solubles du calcium (par exemple le sulfate de calcium) dans le milieu aqueux. Dans cette forme de réalisation de l'invention, les quantités respectives de chlorure de calcium et de carbonate de sodium sont de préférence voisines des quantités stoechiométriques nécessaires pour former, par réaction, du carbonate de calcium.

Selon une première variante de cette forme de réalisation du procédé, le chlorure de calcium et le carbonate de sodium sont introduits simultanément dans le milieu aqueux. Selon une autre variante du procédé, que l'on préfère, la matière solide contient du carbonate de sodium et on introduit le chlorure de calcium dans le milieu aqueux. Dans cette variante de l'invention, la quantité de carbonate de sodium dans la matière solide va dépendre de l'origine de celle-ci. Elle est généralement inférieure à la quantité de chlorure de sodium et habituellement comprise entre 5 et 250 g par kg de matière solide. Dans cette variante de l'invention, on utilise avantageusement une quantité de chlorure de calcium au moins égale à la quantité stoechiométrique nécessaire pour former du carbonate de calcium par réaction avec la totalité du carbonate de sodium de la matière solide. Cette variante du procédé selon l'invention s'applique notamment au cas des poussières que l'on forme en soumettant une fumée contaminée par du chlorure d'hydrogène et des métaux lourds, à un traitement par voie sèche ou semi-humide, avec un réactif basique comprenant du carbonate de sodium ou du bicarbonate de sodium. Elle s'applique aussi aux résidus solides que l'on obtient en soumettant une telle fumée à un lavage avec une solution aqueuse d'hydroxyde de sodium.

Dans une forme d'exécution particulière du procédé selon l'invention, on ajoute un liant hydraulique au milieu aqueux, avant la clarification. Le liant hydraulique peut par exemple comprendre de la chaux, du clinker de ciment Portland ou du ciment Portland. On préfère le clinker de ciment Portland. Le liant hydraulique a pour fonction de former un béton avec le précipité recueilli de la clarification et de l'eau. La quantité de liant hydraulique qu'il faut mettre en oeuvre va dès lors dépendre de la composition de la matière solide soumise au procédé, plus particulièrement de la quantité de métaux lourds et de matières normalement insolubles dans l'eau, qu'elle contient. La quantité optimum de liant hydraulique doit par conséquent être déterminée dans chaque cas particulier, au moyen d'un travail de routine. En pratique, dans la majorité des cas, on obtient de bons résultats en utilisant une quantité pondérale de liant hydraulique sensiblement comprise entre 5 et 90 % (de préférence 10 et 60 %) du poids de matière sèche du précipité susdit.

Dans cette forme de réalisation de l'invention, tout mode opératoire peut être utilisé pour introduire le liant hydraulique dans le milieu aqueux. Un premier mode opératoire consiste à disperser le liant hydraulique dans le milieu aqueux. Selon un second mode opératoire, qui est préféré, le liant hydraulique est dispersé dans l'eau en même temps que la matière solide. Pour exécuter ce mode de réalisation de l'invention, on peut d'abord mélanger le liant hydraulique à la matière solide et disperser ensuite le mélange ainsi obtenu, dans l'eau.

Toutes autres choses égales par ailleurs, la forme de réalisation de l'invention, qui vient d'être décrite, facilite l'étape de clarification et permet d'obtenir une solution aqueuse de chlorure de sodium de plus grande pureté.

Selon une variante avantageuse de cette forme de réalisation de l'invention, le liant hydraulique comprend un composé pouzzolanique, par exemple du laitier de haut fourneau ou des cendres volantes de centrales thermiques de fabrication d'électricité. Dans cette variante de l'invention, le composé pouzzolanique est avantageusement utilisé en une quantité pondérale de 5 à 90 % (de préférence de 10 à 60 %) du poids de matières sèches du précipité recueilli à la clarification.

Dans une autre forme de réalisation du procédé selon l'invention, la solution aqueuse recueillie de la clarification est traitée sur une résine chélatante, pour en éliminer les dernières traces de métaux lourds qui s'y trouveraient à l'état dissous. Des particularités et détails concernant le traitement de la solution aqueuse de chlorure de sodium sur la résine chélatante sont accessibles dans le brevet européen EP-603 218 [SOLVAY (Société Anonyme)].

L'invention s'applique particulièrement bien dans le cas où les métaux lourds de la matière solide comprennent de l'aluminium, de l'arsenic, de l'antimoine, de l'étain et du zinc. Le procédé selon l'invention montre aussi une bonne efficacité pour l'épuration en fer, en phosphore et en silicium. L'invention trouve une utilisation avantageuse pour le traitement des poussières que l'on obtient en soumettant une fumée contaminée par du chlorure d'hydrogène et des métaux lourds, à un traitement par voie sèche ou semi-humide avec un composé basique sodique.

Dans cette utilisation de l'invention, le composé sodique est, par définition, un composé chimique contenant du sodium. Il est généralement un composé inorganique et il est basique de sorte qu'il décompose le chlorure d'hydrogène présent dans la fumée en formant du chlorure de sodium. Le composé sodique constitue généralement plus de 50 % (de préférence au moins 80 %) du poids du réactif basique. Il constitue avantageusement l'essentiel, voire la totalité du réactif basique. Le composé sodique peut par exemple comprendre de l'hydroxyde de sodium, du carbonate de sodium anhydre ou hydraté, du bicarbonate de sodium ou un mélange de carbonate de sodium et de bicarbonate de sodium, par exemple du sesquicarbonate de sodium qui est un composé de formule générale Na₂CO₃.NaHCO₃.2H₂O obtenu notamment au départ d'un minerai de trona. Le bicarbonate de sodium est préféré.

On entend par traitement par voie sèche un traitement dans lequel le réactif basique est introduit à l'état d'une poudre solide dans la fumée, en l'absence d'un liquide, en particulier d'eau. En général, dans le traitement par voie sèche, le réactif basique est mis en oeuvre à l'état d'une poudre que l'on injecte dans un courant de fumée circulant à l'intérieur d'une chambre de réaction.

On entend par traitement semi-humide un traitement dans lequel le réactif basique est introduit dans la fumée en présence d'une quantité de liquide (habituellement de l'eau) telle que celui-ci soit totalement vaporisé au moment où on recueille le résidu solide. Dans le traitement par voie semi-humide, le réactif basique est généralement mis en oeuvre à l'état d'une poudre dispersée dans un liquide, généralement de l'eau. Des informations concernant ie traitement de ia fumée avec ie réactif basique sont accessibles dans le brevet européen EP-0 603 218 et la demande internationale WO 95/19835, tous les deux au nom de SOLVAY (Société Anonyme).

L'utilisation de l'invention, qui vient d'être décrite, trouve une application intéressante pour les fumées produites par l'incinération des déchets ménagers ou hospitaliers, comprenant des composés chlorés.

La solution aqueuse de chlorure de sodium obtenue à l'issue du procédé selon l'invention se particularise par une très grande pureté et trouve, de ce fait, diverses applications dans l'industrie. Elle peut notamment servir de matière première pour la fabrication de carbonate de sodium par le procédé de la soude à l'ammoniaque (également dénommé "Procédé SOLVAY"), pour la fabrication électrochimique de chlore et de solutions aqueuses d'hydroxyde de sodium, ainsi que pour la fabrication de sel solide.

Des particularités et détails de l'invention vont ressortir de la description suivante des dessins annexés.
La figure 1 représente schématiquement une forme de réalisation du procédé selon l'invention;
La figure 2 représente une variante d'exécution du procédé de la figure 1.

Dans ces figures, des mêmes notations de référence désignent des éléments identiques.

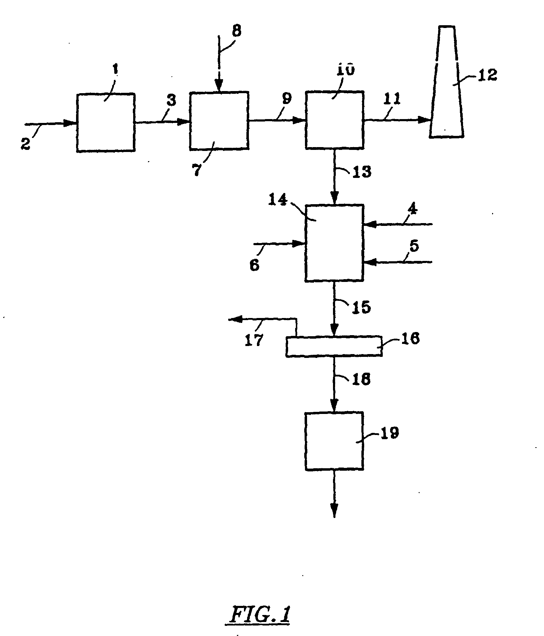

L'installation de la figure 1 comprend un four 1 que l'on alimente avec des déchets ménagers ou hospitaliers 2. La fumée 3 émise par le four 1 est contaminée par du chlorure d'hydrogène, des métaux lourds volatiles et du dioxyde de soufre. Elle est par ailleurs chargée de cendres contenant des métaux lourds. On l'introduit dans une chambre de réaction 7 où on lui additionne du bicarbonate de sodium 8 à l'état d'une poudre. Le bicarbonate de sodium est introduit dans la fumée en une quantité suffisante pour décomposer sensiblement la totalité du chlorure d'hydrogène et du dioxyde de soufre de la fumée et former du chlorure de sodium et du sulfate de sodium. La fumée 9 recueillie de la chambre de réaction 7 est traitée sur un filtre 10 pour la dépoussiérer et la fumée ainsi dépoussiérée 11 est évacuée à la cheminée 12. Le filtre 10 comprend de préférence un filtre à tissu filtrant (par exemple un filtre à manches).

Les poussières 13 retenues sur le filtre 10 comprennent du chlorure de sodium, du sulfate de sodium, des métaux lourds ci du carbonate de sodium provenant de l'excès de bicarbonate de sodium mis en oeuvre dans le réacteur 7. On les introduit dans une chambre de réaction où on introduit par ailleurs du chlorure de calcium 4, de l'hydroxyde de sodium 5 et de l'eau 6. La quantité molaire de chlorure de calcium 4 est au moins égale à la quantité molaire de carbonate de sodium dans les poussières 13. Elle est avantageusement égale à la somme des quantités molaires de carbonate de sodium et de sulfate de sodium dans les poussières 13. L'eau 6 est utilisée en une quantité suffisante pour dissoudre le chlorure de sodium, le carbonate de sodium et le sulfate de sodium des poussières et former un brouet aqueux, pompable. L'hydroxyde de sodium 5 est utilisé en une quantité suffisante pour conférer audit brouet aqueux une valeur de pH sensiblement compris entre 8 et 12, de manière à précipiter les métaux lourds à l'état d'hydroxydes métalliques. Dans la chambre de réaction 14, les métaux lourds des poussières précipitent à l'état d'hydroxydes métalliques. Pendant la précipitation des hydroxydes de métaux lourds, du carbonate de calcium et du sulfate de calcium précipitent, comme résultat de la réaction du chlorure de calcium avec le carbonate de sodium et le sulfate de sodium des poussières. Le brouet aqueux 15 recueilli de la chambre de réaction 14 est immédiatement traité sur un filtre 16 où on sépare, d'une part, un gâteau 17 et, d'autre part, une solution aqueuse de chlorure de sodium 18. Celle-ci est ensuite traitée sur une résine chélatante 19 pour en éliminer les dernières traces de métaux lourds qu'elle contient à l'état dissous.

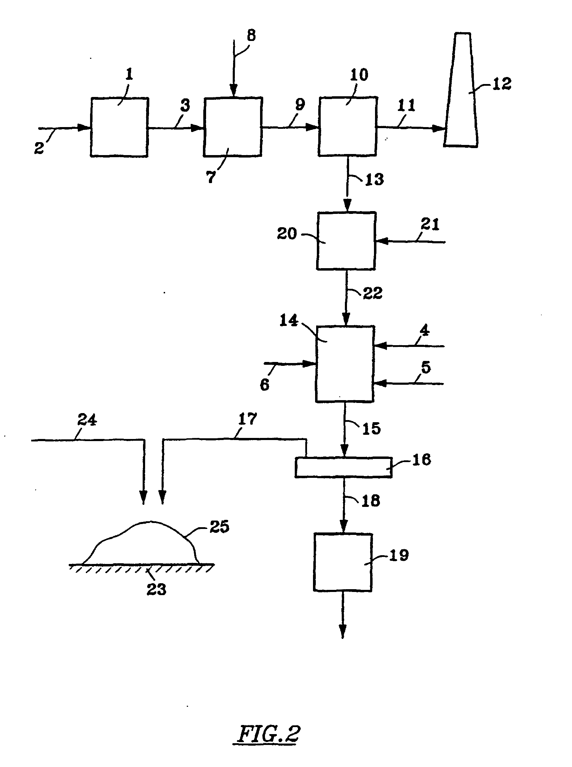

La variante d'exécution schématisée à la figure 2 comprend une chambre de mélange 20 en amont de la chambre de réaction 14. Dans cette chambre de mélange, les poussières 13 sont mélangées avec un liant hydraulique 21, celui-ci consistant avantageusement en un mélange de ciment Portland et de laitier de haut fourneau. Le mélange pulvérulent 22, recueilli de la chambre de mélange 20, est introduit dans la chambre de réaction 14 où on le soumet au traitement décrit plus haut en référence à la figure 1. Le gâteau 17 est déposé sur une aire d'épandage 23, où on l'arrose avec une quantité suffisante d'eau 24 pour provoquer la prise et le durcissement du liant hydraulique et former progressivement un bloc solide et inerte 25. Après broyage, le bloc 15 peut être évacué dans une décharge publique, non représentée.

La variante d'exécution de la figure 2 permet d'obtenir, de manière économique, des solutions aqueuses de chlorure de sodium de grande pureté. Elle présente l'avantage supplémentaire de réaliser une évacuation économique des matières insolubles et des métaux lourds des poussières résultant de l'épuration des fumées des incinérateurs de déchets ménagers ou hospitaliers.

Les exemples suivants servent à illustrer l'invention.

Une fumée provenant d'un incinérateur de déchets ménagers a été traitée avec du bicarbonate de sodium à l'état sec, puis filtrée, comme décrit plus haut, en référence aux figures 1 et 2. On a recueilli sur le filtre des poussières contenant une majorité de chlorure de sodium, ainsi que du carbonate de sodium, du sulfate de sodium et des métaux lourds. On a introduit les poussières dans une chambre de mélange, où on les a mélangées avec du ciment Portland et des cendres volantes de centrale thermique de fabrication d'électricité. Le mélange pulvérulent ainsi obtenu a été divisé en trois lots que l'on a ensuite additionnés d'eau, d'hydroxyde de sodium et de chlorure de calcium. Le brouet aqueux obtenu avec chaque lot a été homogénéisé puis soumis à une filtration, de laquelle on a recueilli une solution aqueuse de chlorure de sodium. Trois essais successifs ont été réalisés séparément avec les trois lots. Les trois essais ont différé l'un de l'autre par la quantité de chlorure de calcium mise en oeuvre.

Dans un premier essai, on a mis en oeuvre 0,6 mole de chlorure de calcium par mole de carbonate de sodium des poussières.

Dans un second essai, on a mis en oeuvre 0,85 mole de chlorure de calcium par mole de carbonate de sodium.

Dans le troisième essai, on a mis en oeuvre 1 mole de chlorure de calcium par mole de carbonate de sodium des poussières.

A l'issue de chaque essai, on a analysé la composition de la solution aqueuse de chlorure de sodium obtenue. Les résultats des analyses sont mentionnés dans les tableaux suivants. Dans le tableau 1, figurent les teneurs de la solution aqueuse en chlorure de sodium, en carbonate de sodium, en hydroxyde de sodium et en sulfate de sodium. Dans le tableau 2 figurent les teneurs de la solution aqueuse en métaux lourds. Les résultats obtenus dans les trois essais montrent le progrès du procédé selon l'invention, en ce qui concerne la pureté de la solution aqueuse de chlorure de sodium. Le tableau 2 montre plus particulièrement l'intérèt d'utiliser 1 mole de chlorure de calcium par mole de carbonate de sodium des poussières.

**Tableau 1**

| Essai n° | Rapport molaire CaCl₂/Na₂CO₃ | NaCl (g/kg) | Na₂CO₃ (g/kg) | NaOH (g/kg) | Na₂SO₄ (g/kg) |
|---|---|---|---|---|---|
| 1 | 0,60 | 166,1 | 23,1 | 5,2 | 38,7 |
| 2 | 0,85 | 195,1 | 2,3 | 1,0 | 29,8 |
| 3 | 1,00 | 213,1 | 0,1 | - | 14,1 |

**Tableau 2**

| | Essai n° | | |
|---|---|---|---|
| | 1 | 2 | 3 |
| Rapport molaire CaCl₂/Na₂CO₃ | 0,60 | 0,85 | 1,00 |
| Al (mg/kg) | 6 058 | 885 | 0,98 |
| As (mg/kg) | 0,50 | 0,09 | < 0,04 |
| Fe (mg/kg) | 0,47 | 0,09 | 0,05 |
| Hg (mg/kg) | 0,03 | 0,02 | 0,02 |
| Mn (mg/kg) | 0,11 | < 0,02 | < 0,02 |
| Mo (mg/kg) | 2,83 | 2,88 | 1,91 |
| Ni (mg/kg) | < 0,16 | < 0,11 | < 0,11 |
| Pb (mg/kg) | < 0,94 | < 0,77 | < 0,72 |
| Sb (mg/kg) | 5,5 | 3,65 | 0,11 |
| Sn (mg/kg) | 6,1 | < 0,22 | < 0,24 |
| Zn (mg/kg) | 8,6 | 0,81 | 0,21 |

## Revendications

1. Procédé de fabrication d'une solution aqueuse de chlorure de sodium, selon lequel on disperse, dans de l'eau, une matière solide comprenant du chlorure de sodium et des métaux lourds compris parmi les métaux dont la masse spécifique est au moins égale à 5 g/cm³, ainsi que le béryllium, l'arsenic, le sélénium, l'antimoine et l'aluminium, on alcalinise le milieu aqueux ainsi obtenu, pour précipiter les métaux lourds à l'état d'hydroxydes métalliques et on soumet ensuite le milieu aqueux à une clarification mécanique, **caractérisé en ce qu'**on coprécipite du carbonate de calcium avec les hydroxydes métalliques dans le milieu aqueux, par réaction entre du chlorure de calcium que l'on introduit dans le milieu aqueux et du carbonate de sodium contenu dans la matière solide.

2. Procédé selon la revendication 1, **caractérisé en ce qu'**on alcalinise le milieu aqueux à une valeur de pH comprise entre 8 et 12.

3. Procédé selon l'une quelconque des revendications 1 à 2, **caractérisé en ce que**, pour alcaliniser le milieu aqueux, on lui additionne de l'hydroxyde de sodium.

4. Procédé selon l'une quelconque des revendications 1 à 3, **caractérisé en ce que** la clarification comprend une filtration.

5. Procédé selon l'une quelconque des revendications 1 à 4, **caractérisé en ce que** la matière solide contient de-50 à 850 g de chlorure de sodium par kg et de 5 à 80 g de métaux lourds par kg.

6. Procédé selon l'une quelconque des revendications 1 à 5, **caractérisé en ce que** la matière solide comprend de 5 à 250 g de carbonate de sodium par kg.

7. Procédé selon l'une quelconque des revendications 1 à 6, **caractérisé en ce qu'**avant d'alcaliniser le milieu aqueux, on disperse dans celui-ci un liant hydraulique en une quantité pondérale comprise entre 5 et 90 % du poids de la matière solide à l'état sec.

8. Procédé selon l'une quelconque des revendication 1 à 7, **caractérisé en ce que** la matière solide comprend des poussières que l'on obtient en soumettant une fumée contaminée par du chlorure d'hydrogène et des métaux lourds, à un traitement par voie sèche ou semi-humide avec un composé basique sodique.

## Patentansprüche

1. Verfahren zur Herstellung einer wäßrigen Natriumchloridlösung, wonach ein festes, Natriumchlorid und Schwermetalle aus der Gruppe von Metallen, deren spezifische Masse wenigstens 5 g/cm³ beträgt, sowie Beryllium, Arsen, Selen, Antimon und Aluminium umfassendes Material in Wasser dispergiert wird, das solcherart erhaltene wäßrige Milieu alkalisch gemacht wird, um die Schwermetalle in Form von Metallhydroxiden auszufällen, und anschließend das wäßrige Milieu einer mechanischen Klärung unterzogen wird, **dadurch gekennzeichnet, daß** in dem wäßrigen Milieu Calciumcarbonat mit den Metallhydroxiden durch Reaktion zwischen in das wäßrige Milieu eingeführtem Calciumchlorid und in dem festen Material enthaltenen Natriumcarbonat co-präzipitiert wird.

2. Verfahren nach Anspruch 1, **dadurch gekennzeichnet, daß** das wäßrige Milieu auf einen pH-Wert von 8 bis 12 alkalisch gemacht wird.

3. Verfahren nach einem der Ansprüche 1 bis 2, **dadurch gekennzeichnet, daß** zum Alkalischmachen des wäßrigen Milieus diesem Natriumhydroxid zugesetzt wird.

4. Verfahren nach einem der Ansprüche 1 bis 3, **dadurch gekennzeichnet, daß** die Klärung eine Filtration umfaßt.

5. Verfahren nach einem der Ansprüche 1 bis 4, **dadurch gekennzeichnet, daß** das feste Material 50 bis 850 g Natriumchlorid je kg und 5 bis 80 g Schwermetalle je kg enthält.

6. Verfahren nach einem der Ansprüche 1 bis 5, **dadurch gekennzeichnet, daß** das feste Material 5 bis 250 g Natriumcarbonat je kg umfaßt.

7. Verfahren nach einem der Ansprüche 1 bis 6, **dadurch gekennzeichnet, daß** vor dem Alkalischmachen des wäßrigen Milieus darin ein hydraulisches Bindemittel in einer Gewichtsmenge zwischen 5 und 90% des Gewichtes des festen Materials im Trockenzustand dispergiert wird.

8. Verfahren nach einem der Ansprüche 1 bis 7, **dadurch gekennzeichnet, daß** das feste Material Stäube umfaßt, die dadurch erhalten werden, daß ein mit Chlorwasserstoff und Schwermetallen verunreinigtes Rauchgas einer Behandlung auf trockenem oder halbnassem Wege mit einer basischen Natriumverbindung unterzogen wird.

## Claims

1. Process for the manufacture of an aqueous sodium chloride solution, according to which a solid material, comprising sodium chloride and heavy metals consisting of metals having a specific weight of at least 5g/cm3 and beryllium, arsenic, selenium, antimony and aluminium, is dispersed in water, the aqueous medium thus obtained is alkalinized so as to precipitate the heavy metals in the form of metal hydroxides and the aqueous medium is then subjected to mechanical clarification, **characterized in that** calcium carbonate is coprecipitated with the metal hydroxides in the aqueous medium, by reaction between calcium chloride which is introduced into the aqueous medium and sodium carbonate contained in the solid material.

2. Process according to Claim 1, **characterized in that** the aqueous medium is alkalinized to a pH value of between 8 and 12.

3. Process according to any one of Claims 1 to 2, **characterized in that** to alkalinize the aqueous medium, sodium hydroxide is added thereto.

4. Process according to any one of Claims 1 to 3, **characterized in that** the clarification comprises a filtration.

5. Process according to any one of Claims 1 to 4, **characterized in that** the solid material contains from 50 to 850 g of sodium chloride per kg and from 5 to 80 g of heavy metals per kg.

6. Process according to any one of Claims 1 to 5, **characterized in that** the solid material comprises from 5 to 250 g of sodium carbonate per kg.

7. Process according to any one of Claims 1 to 6, **characterized in that** before alkalinizing the aqueous medium, a hydraulic binder is dispersed therein in a quantity by weight of between 5 and 90% of the weight of the solid material in the dry state.

8. Process according to any one of Claims 1 to 7, **characterized in that** the solid material comprises dust which is obtained by subjecting smoke, contaminated with hydrogen chloride and heavy metals, to a treatment, by the dry or semiwet route, with a basic sodium compound.
